# EUROPÄISCHE PATENTANMELDUNG

(11) **EP 4 178 179 A1**
(43) Veröffentlichungstag der Anmeldung: **10.05.2023**
(21) Anmeldenummer: 21206237.6
(22) Anmeldetag: 03.11.2021
(51) Int. Cl.: H04L 67/50, H04L 67/561, H04L 67/306, G06Q 30/02

(54) **ERMITTELN EINER INVOLVIERTHEIT/KONZENTRATION EINES NUTZERS EINES ENDGERÄTS**

(71) Anmelder: Deutsche Telekom AG, 53113 Bonn (DE)
(72) Erfinder: MINOW, Jascha, 64625 Bensheim (DE); JAHN, Carl, 65191 Wiesbaden (DE); EL MALLOUKI, Said, 56329 St.Goar (DE)
(74) Vertreter: RDL Patentanwälte PartG mbB

(57) **Zusammenfassung**

Verfahren zum Ermitteln einer Involviertheit eines Nutzers eines Endgeräts, bei dem ein Netzwerk einen Datenstrom überträgt, welcher von einem Endgerät eines Nutzers empfangen oder gesendet wird, sowie Bewertungsdienst für ein Netzwerk, Computerprogrammprodukt und Verfahren zum Ermitteln einer Konzentration einer Konzentration eines Nutzers eines Endgeräts.

## Beschreibung

Die Erfindung betrifft ein Verfahren zum Ermitteln einer Involviertheit eines Nutzers eines Endgeräts, bei dem ein Netzwerk einen Datenstrom überträgt, welcher von einem Endgerät eines Nutzers empfangen oder gesendet wird. Ferner betrifft die Erfindung einen Bewertungsdienst für ein Netzwerk, ein Computerprogrammprodukt sowie ein Verfahren zum Ermitteln einer Konzentration eines Nutzers eines Endgeräts.

Verfahren zum Ermitteln einer Involviertheit eines Nutzers eines Endgeräts dienen dazu, eine Nutzung des Endgeräts durch den Nutzer hinsichtlich einer Involviertheit des Nutzers in das Nutzen des Endgeräts zu bewerten. Unter der Involviertheit ist hier ein Grad oder ein Maß zu verstehen, welcher bzw. welches angibt, inwieweit eine Aufmerksamkeit des Nutzers durch das Nutzen des Endgeräts in Anspruch genommen wird. Mit anderen Worten bezeichnet die Involviertheit hier eine Involvierung des Nutzers durch das Endgerät oder eine Involvierungskraft oder Involvierungsfähigeit des Endgeräts.

Demgegenüber dienen Verfahren zum Ermitteln einer Konzentration eines Nutzers eines Endgeräts dazu, eine Nutzung des Endgeräts durch den Nutzer hinsichtlich einer Konzentration des Nutzers auf das Nutzen des Endgeräts zu bewerten. Unter der Konzentration ist hier ein Grad oder ein Maß zu verstehen, welcher bzw. welches angibt, wie viel Aufmerksamkeit der Nutzer dem Endgerät während des Nutzens schenkt.

Während also die Involviertheit zu einer Macht des Endgeräts über den Nutzer des Endgeräts korrespondiert, bezieht sich die Konzentration auf ein Verhalten des Nutzers gegenüber der Macht des Endgerät. Je mehr das Endgerät den Nutzer involviert, desto mehr konzentriert sich der Nutzers auf das Endgerät.

Allerdings wird sich der Nutzer auch bei einer schwachen Involviertheit auf das Endgerät konzentrieren, solange der Nutzer nicht von dem Nutzen des Endgeräts abgelenkt ist, d.h. solange nicht ein von dem Endgerät verschiedenes Interesse den Nutzer ähnlich stark oder schwächer involviert. Umgekehrt wird sich der Nutzer auch trotz einer starken Involviertheit nicht auf das Endgerät konzentrieren, wenn ein von dem Endgerät verschiedenes Interesse den Nutzer ähnlich stark oder stärker involviert. Zusammengefasst kann die Konzentration des Nutzers auf das Endgerät durch ein konkurrierendes von dem Endgerät verschiedenes Interesse beeinträchtigt sein.

Das Endgerät kann als ein Fernsehgerät (Smart TV, IPTV), eine Spielkonsole, ein Smart Speaker, ein Smartphone, ein Tablet, ein Notebook ein DesktopRechner und dergleichen ausgebildet sein. Die Nutzung des Endgeräts kann ein Anzeigen eines digitalen Inhalts umfassen, welchen ein Netzwerk überträgt und das Endgerät als einen Datenstrom sendet und/oder empfängt und der Nutzer mittels des Endgeräts konsumiert. Der Nutzer wird also konkret durch den von dem Endgerät angezeigten digitalen Inhalt involviert, bzw. konzentriert sich konkret auf den von dem Endgerät angezeigten Inhalt. Mit anderen Worten vermittelt das Endgerät die Involviertheit bzw. die Konzentration des Nutzers.

Bei dem Datenstrom handelt es sich beispielsweise um einen Videostrom, welchen der Nutzer während eines Zeitraums visuell und auditiv wahrnimmt, oder um ein elektronisches Postfach, welches der Nutzer während eines Zeitraums aktiv bearbeitet, beispielsweise E-Mails liest und beantwortet. Im Allgemeinen führt das aktive Bearbeiten des elektronischen Postfachs zu einer höheren Involviertheit des Nutzers als das visuelle und auditive Wahrnehmen, d.h. ein passives Konsumieren, des Videostroms.

Wenn ein Endgerät oder mehrere Endgeräte desselben Nutzers also gleichzeitig einen Videostrom anzeigen und ein elektronisches Postfach des Nutzers aktiv, d.h. mit Aktionen des Nutzers, ausführen, wird das elektronische Postfach den Nutzer im Allgemeinen stärker involvieren als der Videostrom. Entsprechend wird der Nutzer durch das elektronische Postfach von dem Videostrom abgelenkt, d.h. konzentriert sich der Nutzer stärker auf das elektronische Postfach und als auf den Videostrom.

Der Videostrom kann entweder zu einer Videokonferenz, beispielsweise einer Home Schooling Sitzung oder einer virtuellen Arbeitsbesprechung, oder zu einem durch kurze Werbefilme unterbrochenen Unterhaltungsfilm gehören. In diesen Fällen, ist es für einen Anbieter des Videostroms von Interesse, eine Konzentration des Nutzers auf den Videostrom bzw. das den Videostrom anzeigende Endgerät zu ermitteln. Auf diese Weise kann der Anbieter feststellen, ob der Nutzer dem Videostrom folgt, ggf. auch während der kurzen Werbefilme, oder von dem Videostrom abgelenkt ist, ggf. gerade während der kurzen Werbefilme.

Der Erfindung liegt daher die Aufgabe zugrunde, ein einfach zu implementierendes Verfahren vorzuschlagen, welches ausgehend nur von einem von einem Netzwerk übertragenen Datenstrom ein Ermitteln einer Involviertheit eines Nutzers eines den übertragenden Datenstrom sendenden und/oder empfangenden Endgeräts erlaubt. Weitere Aufgaben der Erfindung sind, einen Bewertungsdienst für ein Netzwerk und ein Computerprogrammprodukt bereitzustellen sowie ein Verfahren zum Ermitteln einer Konzentration eines Nutzers eines Endgeräts vorzuschlagen.

Ein Gegenstand der Erfindung ist ein Verfahren zum Ermitteln einer Involviertheit eines Nutzers eines Endgeräts, bei dem ein Netzwerk einen Datenstrom überträgt, welcher von einem Endgerät eines Nutzers empfangen oder gesendet wird. Das Verfahren setzt lediglich ein Übertragen von Datenströmen in einem Netzwerk voraus. Wie üblich ist unter dem Datenstrom eine Mehrzahl von logisch zusammenhängenden Datenpaketen zu verstehen. Ebenso ist der Datenstrom bidirektional aufzufassen, d.h. der Datenstrom kann von dem Endgerät empfangene und von dem Endgerät gesendete Datenpakete umfassen.

Da jedes praktisch relevante Netzwerk diese Voraussetzung erfüllt, ergeben sich vielfältige und zahlreiche Anwendungsmöglichkeiten für das Verfahren. Beispielsweise lässt sich das Verfahren vorteilhaft in einem Netzwerk ausführen, welches sowohl ein Mobilfunksegment als auch ein kabelgebundenes Segment umfasst, mit welchen sich jeweils Endgeräte verbinden.

Bei dem erfindungsgemäßen Verfahren berechnet ein Bewertungsdienst des Netzwerks abhängig von dem übertragenen Datenstrom einen eine Involviertheit des Nutzers des den übertragenen Datenstrom empfangenden oder sendenden Endgeräts angebenden Involviertheitswert, ordnet der Bewertungsdienst den berechneten Involviertheitswert dem Endgerät und dem Nutzer zu und stellt den berechneten Involviertheitswert als eine ermittelte Involviertheit des Nutzers bereit. Der Bewertungsdienst arbeitet als ein zentraler Dienst des Netzwerks und überwacht fortlaufend jeden Datenstrom des Netzwerks. Das Verfahren ermittelt die Involviertheit des Nutzers ausgehend nur von dem übertragenden Datenstrom. Der Involviertheitswert korrespondiert zu der Involviertheit des Nutzers während eines Nutzens des Endgeräts zum Empfangen oder Senden des von dem Netzwerk übertragenen Datenstroms.

Bevorzugt ordnet ein Anreicherungsmodul des Bewertungsdiensts dem übertragenen Datenstrom von dem übertragenen Datenstrom abhängige Metadaten zu und berechnet ein Klassifikationsmodul des Bewertungsdiensts abhängig von den zugeordneten Metadaten den Involviertheitswert. Der Bewertungsdienst umfasst ein Anreicherungsmodul, welches ausgehend nur von dem übertragenen Datenstrom Metadaten des übertragenen Datenstroms erzeugt und die erzeugten Metadaten dem übertragenen Datenstrom zuordnet. Das Anreicherungsmodul extrahiert aus dem übertragenen Datenstrom Informationen, welche in dem übertragenen Datenstrom enthalten sind, und leitet aus dem übertragenen Datenstrom Informationen über den übertragenen Datenstrom ab, welche nicht in dem übertragenen Datenstrom enthalten sind.

Idealerweise berechnet ein künstliches neuronales Netz des Klassifikationsmoduls den Involviertheitswert aus den zugeordneten Metadaten. Die zugeordneten Metadaten bilden ein Muster. Künstliche neuronale Netze werden optimiert oder optimieren sich darin, unterschiedliche Muster zu klassifizieren, d.h. diskrete Klassen zu bilden, welchen die Muster zugeordnet werden. Vorliegend werden unterschiedliche Kombinationen der Metadaten als unterschiedliche Muster unterschiedlichen Involviertheitswerten als unterschiedlichen Klassen zugeordnet.

In vielen Ausführungsformen ordnet das Anreicherungsmodul dem übertragenen Datenstrom mittels Messens oder mittels eines Datenspeichers des Bewertungsdiensts Metadaten betreffend das Endgerät, den Nutzer und/oder den übertragenen Datenstrom zu. Die Involviertheit des Nutzers hängt ab von dem genutzten Endgerät, dem Nutzer selbst und von dem einem Inhalt des übertragenen Datenstroms ab. Beispielsweise involviert ein Endgerät mit einem größeren Anzeigeschirm einen Nutzer stärker als ein Endgerät mit einem kleineren Anzeigeschirm. Oder ist ein jüngerer Nutzer stärker involviert als ein älterer Nutzer. Oder involviert ein in dem Datenstrom enthaltenes Videospiel stärker als ein in dem Datenstrom enthaltener Spielfilm.

Insbesondere kann das Anreicherungsmodul dem übertragenen Datenstrom eine von einer den übertragenen Datenstrom einleitenden Anforderung des Endgeräts abgeleitete Inhaltskategorie des übertragenen Datenstroms, eine Anzahl von in dem Datenstrom enthaltenen Ereignissen und/oder eine maximale Anzahl von Datenpaketen des übertragenen Datenstroms als die den übertragenen Datenstrom betreffende Metadaten zuordnen. Die Anforderung (request) des Endgeräts bestimmt häufig die Inhaltskategorie des übertragenen Datenstroms. Beispielsweise fordert ein Klick auf eine Internetadresse (uniform resource locator, URL) eines Videoportals ein Übertragen eines Videostroms an. Ebenso deutet eine große maximale Anzahl von Datenpaketen auf einen Videostrom hin. Dagegen kann eine Vielzahl von in dem Datenstrom enthaltenen Ereignissen auf eine intensive Interaktion und mithin auf ein in dem Datenstrom enthaltenes Videospiel oder ein Surfen des Nutzers im Internet hindeuten.

Beispielsweise können "Streaming", "Messaging", "Gaming" oder "Browsing" als die Inhaltskategorie des übertragenen Datenstroms abgeleitet werden. Die Inhaltskategorien sind nicht abschließend aufgezählt. Zu der Inhaltskategorie "Streaming" gehören Video- oder Audioströme. Zu der Inhaltskategorie "Messaging" gehören soziale Medien wie Messengerdienste oder elektronische Postfächer. Zu der Inhaltskategorie "Gaming" gehören Videospiele. Zu der Inhaltskategorie "Browsing" gehören Folgen angeforderter Webinhalte.

Ferner kann das Anreicherungsmodul dem übertragenen Datenstrom einen Identifikator des Endgeräts, einen Hersteller des Endgeräts, einen Gerätetyp des Endgeräts, eine Geräterolle des Endgeräts, eine Verbindungsart des Endgeräts, eine Zuordnung des Endgeräts zu einem Nutzer und/oder einem Haushalt, eine gesamte Aktivität des Endgeräts, eine durchschnittliche Aktivität des Endgeräts und/oder eine durchschnittliche Signalstärke des Endgeräts als die das Endgerät betreffenden Metadaten zuordnen. Der Identifikator kann eine MAC-Adresse des Endgeräts sein. Die Verbindungsart des Endgeräts kann eine drahtlose oder kabelgebundene Kommunikationstechnologie sein. Die Zuordnung des Endgeräts zu dem Nutzer kann ein Besitzverhältnis sein oder auf einer weit überwiegenden Nutzung durch denselben Nutzer beruhen. Die durchschnittliche Aktivität kann ein Verhältnis von Einschaltzeiten zu Ausschaltzeiten des Endgeräts sein. Die durchschnittliche Signalstärke kann sich auf ein mobiles Endgerät beziehen, welches sich drahtlos mit dem Netzwerk verbindet.

Beispielsweise können "Smartphone", "Tablet", "Notebook", "Desktoprechner", "Router", "Drucker", "TV-Gerät", "Kühlschrank", "Fahrzeug", "IoT-Gerät" oder "Smartwatch" als der Gerätetyp des Endgeräts und/oder bei dem "andauernd betrieben", "zeitweise betrieben", "steuernd, "gesteuert", "unabhängig", "abhängig", "stationär", "mobil" oder "Ersatz" als die Geräterolle des Endgeräts zugeordnet werden. Die aufgezählten Gerätetypen und Geräterollen sind nicht abschließend. Der Gerätetyp gibt eine Vorrichtungskategorie an. Beispielsweise sind die Gerätetypen "Smartphone", "Tablet", "Fahrzeug" und "Smartwatch" mobile Endgeräte. Dagegen sind die Gerätetypen "Router", "Drucker", "TV-Gerät", "Kühlschrank" stationäre Endgeräte. Der Gerätetyp "Notebook" deutet auf eine zeitweise mobile und zeitweise stationäre Nutzung hin.

Die Geräterolle gibt eine Funktionskategorie an. Beispielsweise wird ein Router "andauernd betrieben", während ein TV-Gerät "zeitweise betrieben". Ein Notebook wird "steuernd" betrieben, während ein Drucker "gesteuert" betrieben wird. Ein Router wird "unabhängig" betrieben, während ein TV-Gerät oder ein Kühlschrank "abhängig" betrieben wird. Ein Smartphone wird "mobil" betrieben, während ein Desktoprechner "stationär" betrieben wird. Ein Tablet kann als "Ersatz" für ein Notebook betrieben werden.

Die dem Datenstrom zugeordneten Gerätetypen und Gerätekategorien werden insbesondere verwendet, um einen relevanten Datenstrom von einem irrelevanten Datenstrom zu unterscheiden. Der relevante Datenstrom korrespondiert zu einem Nutzer, während der irrelevante Datenstrom nicht zu einem Nutzer korrespondiert. Beispielsweise ist ein von einem IoT (Internet of Things)-Gerät empfangener oder gesendeter Datenstrom für das Verfahren irrelevant, während ein von einem Smartphone oder einem TV-Gerät empfangener oder gesendeter Datenstrom für das Verfahren relevant ist.

Weiterhin kann das Anreicherungsmodul dem übertragenen Datenstrom einen Identifikator des Nutzers, eine Zuordnung des Nutzers zu einem Haushalt und/oder einen durchschnittlichen Authentisierungswert des Nutzers als die den Nutzer betreffenden Metadaten zuordnen. Ein Benutzername kann der Identifikator des Nutzers sein. Der durchschnittliche Authentisierungswert kann ein Nutzungsverhältnis des Endgeräts mit einem Login oder ohne ein Login angeben.

Vorteilhaft speichert der Datenspeicher den ermittelten Involviertheitswert mit dem zugeordneten Endgerät und dem zugeordneten Nutzer für einen vorbestimmten Zeitraum und stellt ihn für das Anreicherungsmodul bereit. Der Datenspeicher dient als ein Rückkopplungselement innerhalb des Verfahrens, wodurch eine Präzision des Verfahrens erhöht ist.

Zudem kann der Datenspeicher eine Zuordnung des Endgeräts oder des Nutzers zu einem Haushalt für einen vorbestimmten Zeitraum speichern und für das Anreicherungsmodul bereitstellen. Der vorbestimmte Zeitraum begrenzt einen Umfang von in dem Datenspeicher gespeicherten Informationen und sorgt für eine Aktualität des Datenspeichers.

In verschiedenen Ausführungsformen wird der Involviertheitswert in Echtzeit und/oder periodisch oder ereignisgesteuert und/oder für einen Zeitpunkt oder ein Zeitintervall berechnet. Der in Echtzeit berechnete Involviertheitswert ermöglicht eine Kenntnis der Involviertheit des Nutzers synchron zu der Nutzung des Endgeräts. Das periodische oder ereignisgesteuerte Berechnen geht mit einem vergleichsweise geringen Rechenaufwand einher. Die Involviertheit während eines Zeitintervalls kann durch Mittelung über das Zeitintervall berechnet werden.

Ein weiterer Gegenstand der Erfindung ist ein Bewertungsdienst für ein Netzwerk, welcher konfiguriert ist, in einem einen Datenstrom übertragenden Netzwerk ein erfindungsgemäßes Verfahren auszuführen. Der Bewertungsdienst stellt eine funktionale Erweiterung für das Netzwerk bereit, welche für einen Betreiber des Netzwerks einen wirtschaftlichen Nutzen bieten kann und einem Kunden des Bewertungsdiensts einen wertvollen Einblick in ein Verhalten von Nutzern erlaubt.

Noch ein Gegenstand der Erfindung ist Computerprogrammprodukt für eine Netzwerkentität eines Netzwerks, umfassend ein von der Netzwerkentität des Netzwerks lesbares Speichermedium mit einem in dem Speichermedium gespeicherten und von der Netzwerkentität ausführbaren Programmcode. Die Speichervorrichtung kann als ein bezogen die Netzwerkentität externes Speichermedium wie eine CD-ROM, eine DVD, ein USB-Stick, ein Cloudspeicher und dergleichen oder als ein bezogen auf die Netzwerkentität internes Speichermedium wie einen Arbeitsspeicher oder eine Festplatte ausgebildet sein. Abgesehen davon kann das Computerprogramm für ein sofortiges Ausführen des Programmcodes oder ein Ausführen des Programmcodes nach einem vorherigen Installierens auf der Netzwerkentität vorgesehen sein.

Erfindungsgemäß veranlasst der Programmcode, die Netzwerkentität, in dem Netzwerk einen erfindungsgemäßen Bewertungsdienst zu betreiben, wenn der Programmcode von einem Prozessor der Netzwerkentität ausgeführt wird. Das Computerprogrammprodukt erlaubt ein einfaches Bereitstellen des erfindungsgemäßen Bewertungsdiensts und mithin ein einfaches Implementieren des erfindungsgemäßen Verfahrens zum Ermitteln einer Involviertheit in ein vorhandenes Netzwerk.

Ebenfalls ein Gegenstand der Erfindung ist ein Verfahren zum Ermitteln einer Konzentration eines Nutzers eines Endgeräts, bei dem ein Netzwerk gleichzeitig zwei Datenströme oder mehr als zwei Datenströme überträgt, welche von einem Endgerät oder einer Mehrzahl von Endgeräten eines Nutzers oder einer Mehrzahl von Nutzern empfangen oder gesendet werden. Das Verfahren erweitert das vorstehend beschriebene Verfahren ausdrücklich auf eine Mehrzahl von übertragenen Datenströmen und kann zudem eine Mehrzahl von Endgeräten und Nutzern berücksichtigen. Dies ist eine typische Konstellation für jedes Netzwerk. Entsprechend bestehen vielfältige und zahlreiche Anwendungsmöglichkeiten für die Erfindung.

Erfindungsgemäß führt ein erfindungsgemäßer Bewertungsdienst für jeden übertragenen Datenstrom ein erfindungsgemäßes Verfahren aus, ordnet jeden berechneten Involviertheitswert einem Endgerät und einem Nutzer zu, stellt jeden berechneten Involviertheitswert als ermittelte Involviertheiten der jeweiligen Nutzer bereit und überträgt jeden berechneten Involviertheitswert zu einer Vergleichsanwendung, empfängt die Vergleichsanwendung jeden berechneten Involviertheitswert und ermittelt die Vergleichsanwendung eine Konzentration eines jeden Nutzers durch Zählen und Vergleichen aller dem jeweiligen Nutzer zugeordneten Involviertheitswerte. Die je Nutzer und/oder Endgerät berechneten Involviertheitswerte lassen sich einfach zählen und im Falle einer Mehrzahl einfach vergleichen.

Wenn einem Endgerät oder einem mehrere Endgeräte nutzenden Nutzer mehrere Involviertheitswerte zugeordnet werden, konkurrieren die Involviertheiten des Nutzers, wodurch jede einer einzelnen Involviertheit entsprechende Konzentration des Nutzers verringert ist. Auf diese Weise kann aus der Anzahl und den relativen Größen der Involviertheitswerte abgeleitet werden, ob und wie stark sich der Nutzer auf jeden einzelnen Datenstrom konzentriert.

Ein wesentlicher Vorteil des erfindungsgemäßen Verfahrens besteht darin, dass es allein durch Analysieren von Datenströmen, d.h. nur ausgehend von Datenströmen, welche von einem Netzwerk übertragen werden, eine Involviertheit eines Nutzers eines Endgeräts und darauf aufbauend eine Konzentration eines Nutzers eines Endgeräts ermittelt. Ein weiterer Vorteil ist darin zu sehen, dass es einem Betreiber des Netzwerks ein Anbieten eines wirtschaftlich relevanten Diensts zu ermöglichen. Abgesehen davon lässt sich der an dem Verfahren beteiligte Bewertungsdienst einfach in eine bestehende Infrastruktur des Betreibers integrieren.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben. Es zeigt
- Fig. 1: ein Anwendungsfalldiagramm für ein Verfahren nach einer Ausführungsform der Erfindung zum Ermitteln einer Konzentration eines Nutzers;
- Fig. 2: ein Blockdiagramm eines an dem in Fig. 1 gezeigten Verfahren beteiligten Bewertungsdiensts.

In der Zeichnung sind korrespondierende Merkmale mit identischen Bezugszeichen versehen.

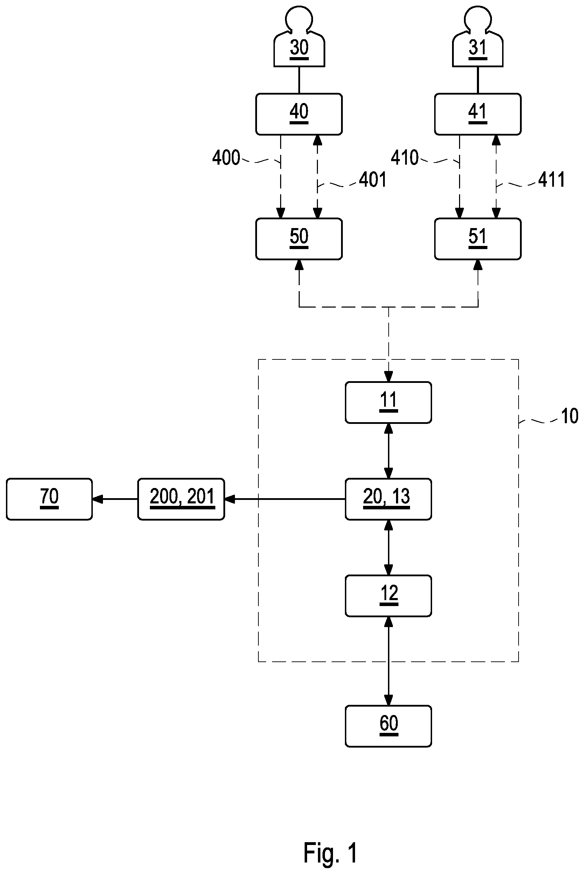

Fig. 1 zeigt ein Anwendungsfalldiagramm für ein Verfahren nach einer Ausführungsform der Erfindung zum Ermitteln einer Konzentration eines Nutzers 30, 31 eines Endgeräts 40, 41. Der Nutzer 30 nutzt das Endgerät 30, und der Nutzer 31 nutzt das Endgerät 41. Das Endgerät 30 sendet und/oder empfängt einen Datenstrom 401, und das Endgerät 31 sendet und/oder empfängt einen Datenstrom 411. Die Datenströme 401 und 411 können jeweils durch eine Anforderung 400 bzw. 410 veranlasst sein.

Ein Netzwerk 10 überträgt die Datenströme 401, 411 zwischen den Endgeräten 30, 31 und einem Anwendungsserver 60, welcher mehrere Anwendungen bereitstellen kann. Selbstverständlich können die mehreren Anwendungen auch von mehreren verschiedenen Anwendungsservern 60 bereitgestellt werden.

Die Datenströme 401, 411 passieren Geräte 50, 51 sowie an sich bekannte und nicht näher spezifizierte Netzwerkkomponenten 11, 12 des Netzwerks 10. Lediglich beispielhaft und nicht einschränkend sind die Endgeräte 30, 31 als ein stationäres Endgerät, beispielsweise ein Desktoprechner oder ein TV-Gerät, bzw. ein mobiles Endgerät, beispielsweise ein Smartphone, ein Tablet, ein Notebook oder eine Smartwatch, und die Geräte 50, 51 als ein stationärer Router bzw. eine Basisstation einer Funkzelle ausgebildet. Die Geräte 50, 51 können auch selbst Datenströme senden/und oder empfangen.

Ferner passieren die Datenströme 401, 411 einen Bewertungsdienst 20 zum Ermitteln einer Involviertheit eines Nutzers 30, 31 eines Endgeräts 40, 41. Der Bewertungsdienst 20 wird von einer Netzwerkentität 13, d.h. einer weiteren Netzwerkkomponente, beispielsweise einem Zentralserver, des Netzwerks 10 betrieben.

Konzentrationen der Nutzer 30, 31 auf die jeweiligen Endgeräte 40, 41 werden mittels eines Verfahrens zum Ermitteln einer Konzentration eines Nutzers 30, 31 eines Endgeräts 40, 41 wie folgt ermittelt.

Das Netzwerk 10 überträgt gleichzeitig die beiden Datenströme 401, 411 oder auch mehr als die beiden Datenströme 401, 411. Der Bewertungsdienst 20 berechnet für jeden übertragenen Datenstrom 401, 411 einen Involviertheitswert 200, 201, ordnet jeden berechneten Involviertheitswert 200, 201 einem Endgerät 40, 41 und einem Nutzer 30, 31 zu und stellt die berechneten Involviertheitswerte 200, 201 als ermittelte Involviertheiten der jeweiligen Nutzer 30, 31 bereit.

Der Bewertungsdienst 20 überträgt jeden berechneten Involviertheitswert 200, 201 zu einer Vergleichsanwendung 70. Die Vergleichsanwendung 70 empfängt jeden berechneten Involviertheitswert 200, 201 und ermittelt eine Konzentration eines jeden Nutzers 30, 31 durch Zählen und Vergleichen aller dem jeweiligen Nutzer 30, 31 zugeordneten Involviertheitswerte 200, 201.

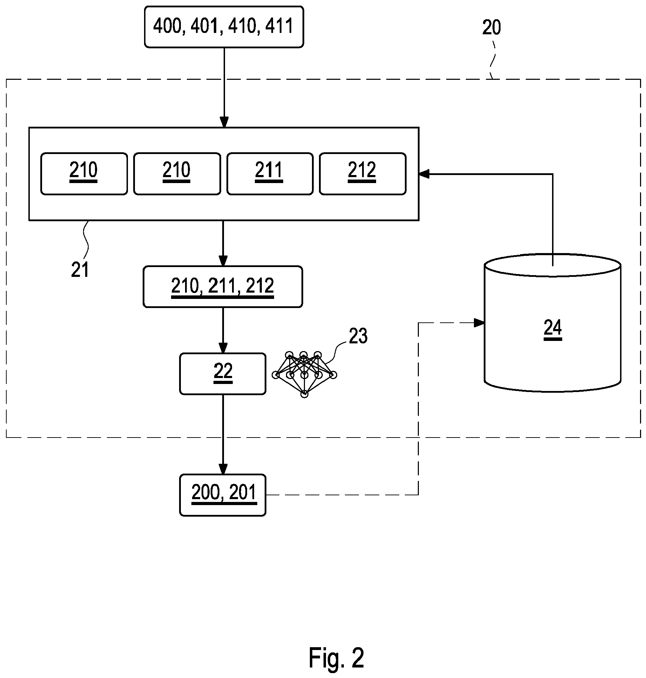

Fig. 2 zeigt ein Blockdiagramm des an dem in Fig. 1 gezeigten Verfahren beteiligten Bewertungsdiensts 20. Der Bewertungsdienst 20 für das Netzwerk 10 umfasst ein Anreicherungsmodul 21 und ein Klassifikationsmodul 22. Das Klassifikationsmodul 22 kann ein künstliches neuronales Netz 23 umfassen. Ferner kann ein Datenspeicher 24 zu dem Bewertungsdienst 20 gehören.

Der Bewertungsdienst 20 ist konfiguriert, in dem die Datenströme 401, 411 übertragenden Netzwerk 10 zum Ermitteln einer Involviertheit eines Nutzers 30, 31 eines Endgeräts 40, 41 ein nachfolgend beschriebenes Verfahren auszuführen.

Der Bewertungsdienst 20 kann mittels eines für die Netzwerkentität 13 des Netzwerks 10 geeigneten Computerprogrammprodukts konfiguriert sein. Das Computerprogrammprodukt umfasst ein von der Netzwerkentität 13 des Netzwerks 10 lesbares Speichermedium mit einem in dem Speichermedium gespeicherten und von der Netzwerkentität 13 ausführbaren Programmcode. Der Programmcode veranlasst die Netzwerkentität 13, in dem Netzwerk 10 den Bewertungsdienst 20 zu betreiben, wenn der Programmcode von einem Prozessor der Netzwerkentität 13 ausgeführt wird.

Bei dem Verfahren überträgt das Netzwerk 10 einen Datenstrom 401, 411. Der Bewertungsdienst 20 des Netzwerks 10 berechnet abhängig von dem übertragenen Datenstrom 401, 411 einen eine Involviertheit eines Nutzers 30, 31 eines den übertragenen Datenstrom 401, 411 empfangenden oder sendenden Endgeräts 40, 41 angebenden Involviertheitswert 200, 201.

Im Einzelnen kann ein Anreicherungsmodul 21 des Bewertungsdiensts 20 dem übertragenen Datenstrom 401, 411 von dem übertragenen Datenstrom 401, 411 abhängige Metadaten 210, 211, 212 zuordnen.

Das Anreicherungsmodul 21 ordnet dem übertragenen Datenstrom 401, 411 vorteilhaft mittels Messens oder mittels des Datenspeichers 24 des Bewertungsdiensts 20 Metadaten 210, 211, 212 betreffend das Endgerät 40, 41, den Nutzer 30, 31 und/oder den übertragenen Datenstrom 401, 411 zu.

Insbesondere kann das Anreicherungsmodul 21 dem übertragenen Datenstrom 401, 411 eine von einer den übertragenen Datenstrom 401, 411 einleitenden Anforderung 400, 410 des Endgeräts 40, 41 abgeleitete Inhaltskategorie des übertragenen Datenstroms 401, 411, eine Anzahl von in dem Datenstrom 401, 411 enthaltenen Ereignissen und/oder eine maximale Anzahl von Datenpaketen des übertragenen Datenstroms 401, 411 als die den übertragenen Datenstrom 401, 411 betreffende Metadaten 210 zuordnen.

Beispielhaft wird "Streaming", "Messaging", "Gaming" oder "Browsing" als die Inhaltskategorie des übertragenen Datenstroms 401, 411 abgeleitet.

Das Anreicherungsmodul 21 ordnet dem übertragenen Datenstrom 401, 411 insbesondere einen Identifikator des Endgeräts 40, 41, einen Hersteller des Endgeräts 40, 41, einen Gerätetyp des Endgeräts 40, 41, eine Geräterolle des Endgeräts 40, 41, eine Verbindungsart des Endgeräts 40, 41, eine Zuordnung des Endgeräts 40, 41 zu einem Nutzer 30, 31 und/oder einem Haushalt, eine gesamte Aktivität des Endgeräts 40, 41, eine durchschnittliche Aktivität des Endgeräts 40, 41 und/oder eine durchschnittliche Signalstärke des Endgeräts 40, 41 als die das Endgerät 40, 41 betreffenden Metadaten 211 zu.

Beispielhaft wird "Smartphone", "Tablet", "Notebook", "Desktoprechner", "Router", "Drucker", "TV-Gerät", "Kühlschrank", "Fahrzeug", "loT-Gerät" oder "Smartwatch" als der Gerätetyp des Endgeräts 40, 41 und/oder bei dem "andauernd betrieben", "zeitweise betrieben", "steuernd, "gesteuert", "unabhängig", "abhängig", "stationär", "mobil" oder "Ersatz" als die Geräterolle des Endgeräts 40, 41 zugeordnet.

Insbesondere ordnet das Anreicherungsmodul 21 dem übertragenen Datenstrom 401, 411 einen Identifikator des Nutzers 30, 31, eine Zuordnung des Nutzers 30, 31 zu einem Haushalt und/oder einen durchschnittlichen Authentisierungswert des Nutzers 30, 31 als die den Nutzer 30, 31 betreffenden Metadaten 212 zu.

Idealerweise speichert der Datenspeicher 24 den ermittelten Involviertheitswert 200, 201 mit dem zugeordneten Endgerät 40, 41 und dem zugeordneten Nutzer 30, 31 für einen vorbestimmten Zeitraum und stellt den gespeicherten Involviertheitswert 200, 201 für das Anreicherungsmodul 21 bereit.

Abgesehen davon kann der Datenspeicher 24 eine Zuordnung des Endgeräts 40, 41 oder des Nutzers 30, 31 zu einem Haushalt für einen vorbestimmten Zeitraum speichern und für das Anreicherungsmodul 21 bereitstellen. Bevorzugt wird der Involviertheitswert 200, 201 in Echtzeit und/oder periodisch oder ereignisgesteuert und/oder für einen Zeitpunkt oder ein Zeitintervall berechnet.

Ein Klassifikationsmodul 22 des Bewertungsdiensts 20 kann abhängig von den zugeordneten Metadaten 210, 211, 212 den Involviertheitswert 200, 201 berechnen. Insbesondere berechnet das künstliche neuronale Netz 23 des Klassifikationsmoduls 22 den Involviertheitswert 200, 201 aus den zugeordneten Metadaten 210, 211, 212.

Der Bewertungsdienst 20 ordnet den berechneten Involviertheitswert 200, 201 dem Endgerät 40, 41 und dem Nutzer 30, 31 zu und stellt den berechneten Involviertheitswert 200, 201 als eine ermittelte Involviertheit des Nutzers 30, 31 bereit.

### Bezugszeichenliste

- 10: Netzwerk
- 11: Netzwerkkomponente
- 12: Netzwerkkomponente
- 13: Netzwerkentität
- 20: Bewertungsdienst
- 21: Anreicherungsmodul
- 210: Metadaten
- 211: Metadaten
- 212: Metadaten
- 22: Klassifikationsmodul
- 23: künstliches neuronales Netz
- 24: Datenspeicher
- 200: Involviertheitswert
- 201: Involviertheitswert
- 30: Nutzer
- 31: Nutzer
- 40: Endgerät
- 400: Anforderung
- 401: Datenstrom
- 41: Endgerät
- 410: Anforderung
- 411: Datenstrom
- 50: Gerät
- 51: Gerät
- 60: Anwendungsserver
- 70: Vergleichsanwendung

## Patentansprüche

1. Verfahren zum Ermitteln einer Involviertheit eines Nutzers (30, 31) eines Endgeräts (40, 41), bei dem
- ein Netzwerk (10) einen Datenstrom (401, 411) überträgt;
- ein Bewertungsdienst (20) des Netzwerks (10) abhängig von dem übertragenen Datenstrom (401, 411) einen eine Involviertheit eines Nutzers (30, 31) eines den übertragenen Datenstrom (401, 411) empfangenden oder sendenden Endgeräts (40, 41) angebenden Involviertheitswert (200, 201) berechnet;
- der Bewertungsdienst (20) den berechneten Involviertheitswert (200, 201) dem Endgerät (40, 41) und dem Nutzer (30, 31) zuordnet und als eine ermittelte Involviertheit des Nutzers (30, 31) bereitstellt.

2. Verfahren nach Anspruch 1, bei dem
- ein Anreicherungsmodul (21) des Bewertungsdiensts (20) dem übertragenen Datenstrom (401, 411) von dem übertragenen Datenstrom (401, 411) abhängige Metadaten (210, 211, 212) zuordnet;
- ein Klassifikationsmodul (22) des Bewertungsdiensts (20) abhängig von den zugeordneten Metadaten (210, 211, 212) den Involviertheitswert (200, 201) berechnet.

3. Verfahren nach Anspruch 2, bei dem ein künstliches neuronales Netz (23) des Klassifikationsmoduls (22) den Involviertheitswert (200, 201) aus den zugeordneten Metadaten (210, 211, 212) berechnet.

4. Verfahren nach Anspruch 2 oder 3, bei dem das Anreicherungsmodul (21) dem übertragenen Datenstrom (401, 411) mittels Messens oder mittels eines Datenspeichers (24) des Bewertungsdiensts (20) Metadaten (210, 211, 212) betreffend das Endgerät (40, 41), den Nutzer (30, 31) und/oder den übertragenen Datenstrom (401, 411) zuordnet.

5. Verfahren nach Anspruch 4, bei dem das Anreicherungsmodul (21) dem übertragenen Datenstrom (401, 411) eine von einer den übertragenen Datenstrom (401, 411) einleitenden Anforderung (400, 410) des Endgeräts (40, 41) abgeleitete Inhaltskategorie des übertragenen Datenstroms (401, 411), eine Anzahl von in dem Datenstrom enthaltenen Ergeignissen (401, 411) und/oder eine maximale Anzahl von Datenpaketen des übertragenen Datenstroms (401, 411) als die den übertragenen Datenstrom (401, 411) betreffende Metadaten (210) zuordnet.

6. Verfahren nach Anspruch 4 oder 5, bei dem "Streaming", "Messaging", "Gaming" oder "Browsing" als die Inhaltskategorie des übertragenen Datenstroms (401, 411) abgeleitet wird.

7. Verfahren nach einem der Ansprüche 4 bis 6, bei dem das Anreicherungsmodul (21) dem übertragenen Datenstrom (401, 411) einen Identifikator des Endgeräts (40, 41), einen Hersteller des Endgeräts (40, 41), einen Gerätetyp des Endgeräts (40, 41), eine Geräterolle des Endgeräts (40, 41), eine Verbindungsart des Endgeräts (40, 41), eine Zuordnung des Endgeräts (40, 41) zu einem Nutzer (30, 31) und/oder einem Haushalt, eine gesamte Aktivität des Endgeräts (40, 41), eine durchschnittliche Aktivität des Endgeräts (40, 41) und/oder eine durchschnittliche Signalstärke des Endgeräts (40, 41) als die das Endgerät (40, 41) betreffenden Metadaten (211) zuordnet.

8. Verfahren nach Anspruch 7, bei dem "Smartphone", "Tablet", "Notebook", "Desktoprechner", "Router", "Drucker", "TV-Gerät", "Kühlschrank", "Fahrzeug", "loT-Gerät" oder "Smartwatch" als der Gerätetyp des Endgeräts (40, 41) und/oder bei dem "andauernd betrieben", "zeitweise betrieben", "steuernd, "gesteuert", "unabhängig", "abhängig", "stationär", "mobil" oder "Ersatz" als die Geräterolle des Endgeräts (40, 41) zugeordnet wird.

9. Verfahren nach einem der Ansprüche 4 bis 8, bei dem das Anreicherungsmodul (21) dem übertragenen Datenstrom (401, 411) einen Identifikator des Nutzers (30, 31), eine Zuordnung des Nutzers (30, 31) zu einem Haushalt und/oder einen durchschnittlichen Authentisierungswert des Nutzers (30, 31) als die den Nutzer (30, 31) betreffenden Metadaten (212) zuordnet.

10. Verfahren nach einem der Ansprüche 4 bis 9, bei dem der Datenspeicher (24) den ermittelten Involviertheitswert (200, 201) mit dem zugeordneten Endgerät (40, 41) und dem zugeordneten Nutzer (30, 31) für einen vorbestimmten Zeitraum speichert und für das Anreicherungsmodul (21) bereitstellt.

11. Verfahren nach Anspruch 10, bei dem der Datenspeicher (24) eine Zuordnung des Endgeräts (40, 41) oder des Nutzers (30, 31) zu einem Haushalt für einen vorbestimmten Zeitraum speichert und für das Anreicherungsmodul (21) bereitstellt.

12. Verfahren nach einem der Ansprüche 1 bis 11, bei dem der Involviertheitswert (200, 201) in Echtzeit und/oder periodisch oder ereignisgesteuert und/oder für einen Zeitpunkt oder ein Zeitintervall berechnet wird.

13. Bewertungsdienst (20) für ein Netzwerk (10), welcher konfiguriert ist, in einem einen Datenstrom (401, 411) übertragenden Netzwerk (10) ein Verfahren nach einem der Ansprüche 1 bis 12 auszuführen.

14. Computerprogrammprodukt für eine Netzwerkentität (13) eines Netzwerks (10), umfassend ein von der Netzwerkentität (13) des Netzwerks (10) lesbares Speichermedium mit einem in dem Speichermedium gespeicherten und von der Netzwerkentität (13) ausführbaren Programmcode, welcher die Netzwerkentität (13) veranlasst, in dem Netzwerk (10) einen Bewertungsdienst (20) nach Anspruch 13 zu betreiben, wenn der Programmcode von einem Prozessor der Netzwerkentität (13) ausgeführt wird.

15. Verfahren zum Ermitteln einer Konzentration eines Nutzers (30, 31) eines Endgeräts (40, 41), bei dem
- ein Netzwerk (10) gleichzeitig zwei Datenströme (401, 411) oder mehr als zwei Datenströme (401, 411) überträgt;
- ein Bewertungsdienst (20) nach Anspruch 13 für jeden übertragenen Datenstrom (401, 411) ein Verfahren nach einem der Ansprüche 1 bis 12 ausführt und jeden berechneten Involviertheitswert (200, 201) einem Endgerät (40, 41) und einem Nutzer (30, 31) zuordnet und als ermittelte Involviertheiten der jeweiligen Nutzer (30, 31) bereitstellt;
- der Bewertungsdienst (20) jeden berechneten Involviertheitswert (200, 201) zu einer Vergleichsanwendung (70) überträgt;
- die Vergleichsanwendung (70) jeden berechneten Involviertheitswert (200, 201) empfängt und eine Konzentration eines jeden Nutzers (30, 31) durch Zählen und Vergleichen aller dem jeweiligen Nutzer (30, 31) zugeordneten Involviertheitswerte (200, 201) ermittelt.

## Geänderte Patentansprüche

### Geänderte Patentansprüche gemäss Regel 137(2) EPÜ.

1. Verfahren zum Ermitteln einer Involviertheit eines Nutzers (30, 31) eines Endgeräts (40, 41), bei dem
- ein Netzwerk (10) einen Datenstrom (401, 411) überträgt;
- ein Bewertungsdienst (20) als ein zentraler Dienst des Netzwerks (10) abhängig nur von dem übertragenen Datenstrom (401, 411) einen eine Involviertheit eines Nutzers (30, 31) eines den übertragenen Datenstrom (401, 411) empfangenden oder sendenden Endgeräts (40, 41) angebenden Involviertheitswert (200, 201) berechnet;
- der Bewertungsdienst (20) den berechneten Involviertheitswert (200, 201) dem Endgerät (40, 41) und dem Nutzer (30, 31) zuordnet und als eine ermittelte Involviertheit des Nutzers (30, 31) bereitstellt.

2. Verfahren nach Anspruch 1, bei dem
- ein Anreicherungsmodul (21) des Bewertungsdiensts (20) dem übertragenen Datenstrom (401, 411) von dem übertragenen Datenstrom (401, 411) abhängige Metadaten (210, 211, 212) zuordnet;
- ein Klassifikationsmodul (22) des Bewertungsdiensts (20) abhängig von den zugeordneten Metadaten (210, 211, 212) den Involviertheitswert (200, 201) berechnet.

3. Verfahren nach Anspruch 2, bei dem ein künstliches neuronales Netz (23) des Klassifikationsmoduls (22) den Involviertheitswert (200, 201) aus den zugeordneten Metadaten (210, 211, 212) berechnet.

4. Verfahren nach Anspruch 2 oder 3, bei dem das Anreicherungsmodul (21) dem übertragenen Datenstrom (401, 411) mittels Messens oder mittels eines Datenspeichers (24) des Bewertungsdiensts (20) Metadaten (210, 211, 212) betreffend das Endgerät (40, 41), den Nutzer (30, 31) und/oder den übertragenen Datenstrom (401, 411) zuordnet.

5. Verfahren nach Anspruch 4, bei dem das Anreicherungsmodul (21) dem übertragenen Datenstrom (401, 411) eine von einer den übertragenen Datenstrom (401, 411) einleitenden Anforderung (400, 410) des Endgeräts (40, 41) abgeleitete Inhaltskategorie des übertragenen Datenstroms (401, 411), eine Anzahl von in dem Datenstrom enthaltenen Ereignissen (401, 411) und/oder eine maximale Anzahl von Datenpaketen des übertragenen Datenstroms (401, 411) als die den übertragenen Datenstrom (401, 411) betreffende Metadaten (210) zuordnet.

6. Verfahren nach Anspruch 5, bei dem "Streaming", "Messaging", "Gaming" oder "Browsing" als die Inhaltskategorie des übertragenen Datenstroms (401, 411) abgeleitet wird.

7. Verfahren nach einem der Ansprüche 4 bis 6, bei dem das Anreicherungsmodul (21) dem übertragenen Datenstrom (401, 411) einen Identifikator des Endgeräts (40, 41), einen Hersteller des Endgeräts (40, 41), einen Gerätetyp des Endgeräts (40, 41), eine Geräterolle des Endgeräts (40, 41), eine Verbindungsart des Endgeräts (40, 41), eine Zuordnung des Endgeräts (40, 41) zu einem Nutzer (30, 31) und/oder einem Haushalt, eine gesamte Aktivität des Endgeräts (40, 41), eine durchschnittliche Aktivität des Endgeräts (40, 41) und/oder eine durchschnittliche Signalstärke des Endgeräts (40, 41) als die das Endgerät (40, 41) betreffenden Metadaten (211) zuordnet.

8. Verfahren nach Anspruch 7, bei dem "Smartphone", "Tablet", "Notebook", "Desktoprechner", "Router", "Drucker", "TV-Gerät", "Kühlschrank", "Fahrzeug", "IoT-Gerät" oder "Smartwatch" als der Gerätetyp des Endgeräts (40, 41) und/oder bei dem "andauernd betrieben", "zeitweise betrieben", "steuernd, "gesteuert", "unabhängig", "abhängig", "stationär", "mobil" oder "Ersatz" als die Geräterolle des Endgeräts (40, 41) zugeordnet wird.

9. Verfahren nach einem der Ansprüche 4 bis 8, bei dem das Anreicherungsmodul (21) dem übertragenen Datenstrom (401, 411) einen Identifikator des Nutzers (30, 31), eine Zuordnung des Nutzers (30, 31) zu einem Haushalt und/oder einen durchschnittlichen Authentisierungswert des Nutzers (30, 31) als die den Nutzer (30, 31) betreffenden Metadaten (212) zuordnet.

10. Verfahren nach einem der Ansprüche 4 bis 9, bei dem der Datenspeicher (24) den ermittelten Involviertheitswert (200, 201) mit dem zugeordneten Endgerät (40, 41) und dem zugeordneten Nutzer (30, 31) für einen vorbestimmten Zeitraum speichert und für das Anreicherungsmodul (21) bereitstellt.

11. Verfahren nach Anspruch 10, bei dem der Datenspeicher (24) eine Zuordnung des Endgeräts (40, 41) oder des Nutzers (30, 31) zu einem Haushalt für einen vorbestimmten Zeitraum speichert und für das Anreicherungsmodul (21) bereitstellt.

12. Verfahren nach einem der Ansprüche 1 bis 11, bei dem der Involviertheitswert (200, 201) in Echtzeit und/oder periodisch oder ereignisgesteuert und/oder für einen Zeitpunkt oder ein Zeitintervall berechnet wird.

13. Bewertungsdienst (20) für ein Netzwerk (10), welcher konfiguriert ist, in einem einen Datenstrom (401, 411) übertragenden Netzwerk (10) ein Verfahren nach einem der Ansprüche 1 bis 12 auszuführen.

14. Computerprogrammprodukt für eine Netzwerkentität (13) eines Netzwerks (10), umfassend ein von der Netzwerkentität (13) des Netzwerks (10) lesbares Speichermedium mit einem in dem Speichermedium gespeicherten und von der Netzwerkentität (13) ausführbaren Programmcode, welcher die Netzwerkentität (13) veranlasst, in dem Netzwerk (10) einen Bewertungsdienst (20) nach Anspruch 13 zu betreiben, wenn der Programmcode von einem Prozessor der Netzwerkentität (13) ausgeführt wird.

15. Verfahren zum Ermitteln einer Konzentration eines Nutzers (30, 31) eines Endgeräts (40, 41), bei dem
- ein Netzwerk (10) gleichzeitig zwei Datenströme (401, 411) oder mehr als zwei Datenströme (401, 411) überträgt;
- ein Bewertungsdienst (20) nach Anspruch 13 für jeden übertragenen Datenstrom (401, 411) ein Verfahren nach einem der Ansprüche 1 bis 12 ausführt und jeden berechneten Involviertheitswert (200, 201) einem Endgerät (40, 41) und einem Nutzer (30, 31) zuordnet und als ermittelte Involviertheiten der jeweiligen Nutzer (30, 31) bereitstellt;
- der Bewertungsdienst (20) jeden berechneten Involviertheitswert (200, 201) zu einer Vergleichsanwendung (70) überträgt;
- die Vergleichsanwendung (70) jeden berechneten Involviertheitswert (200, 201) empfängt und eine Konzentration eines jeden Nutzers (30, 31) durch Zählen und Vergleichen aller dem jeweiligen Nutzer (30, 31) zugeordneten Involviertheitswerte (200, 201) ermittelt.
